# EUROPEAN PATENT SPECIFICATION

(11) **EP 1 562 825 B1**
(45) Date of publication and mention of the grant of the patent: **19.07.2006**
(21) Application number: 03772411.9
(22) Date of filing: 06.11.2003
(51) Int. Cl.: B64D 1/14

(54) **IMPROVED AERIAL DELIVERY PLATFORM**
VERBESSERTE LUFTABWURFPLATTFORM
PLATE-FORME DE DISTRIBUTION AERIENNE AMELIOREE

(30) Priority: 07.11.2002 GB 0225977
(43) Date of publication of application: 17.08.2005
(73) Proprietor: Airborne Systems Limited, Bridgend, CF32 8PL (GB)
(72) Inventor: PARKINSON, Stephen Thomas, Penarth, Vale of Glamorgan CF64 1SE (GB)
(74) Representative: Knott, Stephen Gilbert
(86) International application number: PCT/GB2003/004821
(87) International publication number: WO 2004/041642

(56) References cited:
- FR-A- 1 237 871
- US-A- 2 964 139
- US-A- 3 266 757
- US-A- 4 645 142
- US-A- 5 944 282

## Description

Aerial delivery platforms are used in the air transportation and delivery of payloads such as military vehicles. They are contained within aircraft and discharged whereupon they descend under parachute to the ground. In order to provide some measure of protection to the payload and/or platform it is known to provide shock absorbing measures and typically airbags are used which open upon descent by gravity. The inflated airbags provide a measure of deceleration when the platform lands, and by means of controlled overpressure in the airbags, an upwardly directed reaction slows final descent of the payload-bearing platform before it reaches the ground. Overpressure in the inflated airbags can be controlled by a small orifice, initially sealed with a latex burst patch, otherwise the airbag is essentially airtight upon landing. For an illustrated example of a known construction, the reader is referred to US-A - 2,774,560 and FR-A-1 237 871.

The known system described above does however suffer from a number of disadvantages. For instance, the conventional airbags deployed have unsatisfactory overall performance. At and above substantial platform weights from e.g. heavy payloads, the conventional airbags have insufficient shock absorbing capacity to absorb all the descent energy. The airbags incorporate non-reusable sacrificial components so the airbags are not readily reusable without additional work and materials. Inflation of the bags takes place through ram air effects at slow descent speed, and in consequence initial overpressure is small. Significant stroke of the bags is used to develop satisfactory overpressure, representing inefficient use of the material. Moreover, the conventially fitted airbags only provide vertical deceleration generally limited to approximately two thirds of the available underside area of the platform, and no lateral pressure gradient exists. This limits any rollover protection in side wind landing conditions. Any resulting rollover causes serious damage to the payload and platform.

Accordingly we have now devised a modified and improved aerial delivery platform which seeks to avoid or reduce the aforementioned disadvantages.

According to one aspect of the present invention there is provided an aerial delivery platform comprising a generally flat base for supporting a payload, at least one pair of inflatable airbags mounted underneath the base and capable of inflation during aerial descent, the airbags having a main body part extending downwardly of the base, and an extension part adjacent the main body part extending outwardly thereof and having a sidewall which, upon airbag inflation, extends to the region of at least one base member edge, the extension part also forming an extension to the base of the main body part the or each airbag incorporating sidewalls, a base, a neck part and an internally located separating wall spacing the extension part from the main body part.

It is preferred for the main body part to be integrally formed with the extension part. Upon inflation of the airbags, it is preferred for the underside of the extension part and the underside of the main body part to become generally coplanar. It is preferred that the underside of the main body part and the underside of the extension part provide protective coverage to the underneath surface and edges of the platform base upon impact with the ground.

The main body part may constitute a primary internal chamber whilst the extension part may comprise a secondary internal chamber wherein the chambers are separated by a membrane located internally of the airbags.

In order that the invention including further preferred features of it may be illustrated, more easily appreciated and readily carried into effect by those skilled in the art, exemplary embodiments will now be described, by way of non-limiting example only, with reference to the accompanying drawings also showing a conventional construction and wherein:
Figure 1 is a side elevation of a known construction in a form suitable for loading into an aircraft;
Figure 2 is an elevation similar to Figure 1 in which the airbags are released to commence inflation;
Figure 3 shows inflation of the airbags in the Figure 1 and 2 arrangements;
Figure 4 shows the airbags fully deployed;
Figure 5 shows landing of the known aerial platform;
Figure 6 shows the known platform wherein the airbags deflate following landing;
Figure 7 is a side elevation of an embodiment of the present aerial delivery platform;
Figure 8 is a side view similar to Figure 7, wherein the airbags are released for deployment;
Figure 9 shows the platform wherein the airbags are fully inflated before a landing,
Figure 10 shows the platform wherein the airbags impact upon a ground surface,
Figure 11 shows a conventional construction of skid door timer release mechanism,
Figure 11a shows an enlarged detail of the release mechanism present in Figure 11 in the fired position, and
Figure 11b shows an enlarged detail of the release channel and hook present in Figure 11.

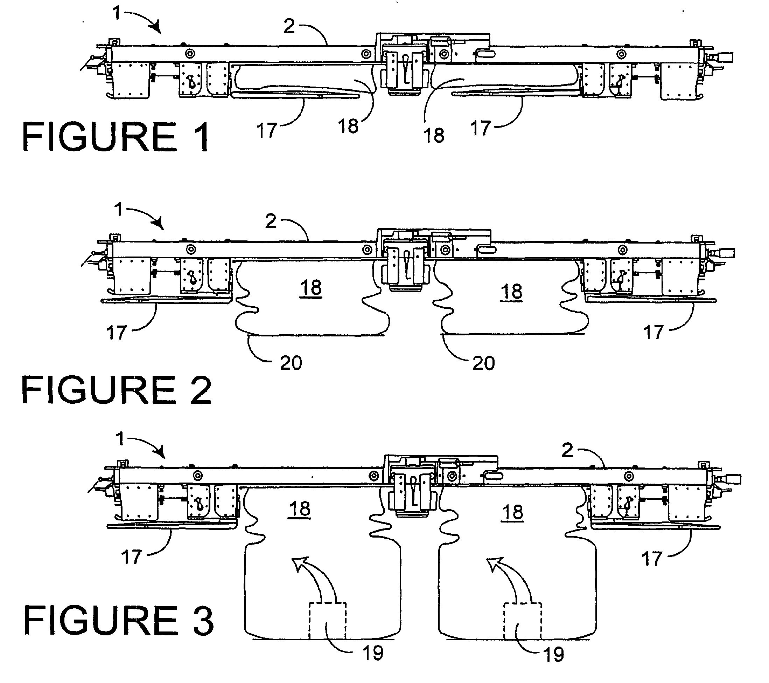

Referring to the drawings and initially to Figures 1 to 6 and 11 showing a known construction, an aerial delivery platform 1 has a generally flat base which is essentially a rectangular framework array. On the underside of the base, at least two airbags 18 are fitted. The airbags are suspended from a medium stressed platform by top boards which locate in grooves. At rest and before deployment, the airbags are retained uninflated by a pair of hinged skid doors 17. As shown in Figure 2, following discharge from an aircraft, the skid doors 17 are arranged to open by a timer release mechanism, and spring open through 180 degrees. Both airbags 18 start to deploy during further descent by virtue of the weight of the bottom boards 20 securely affixed to the lowermost, ground engaging, surface of each airbag.

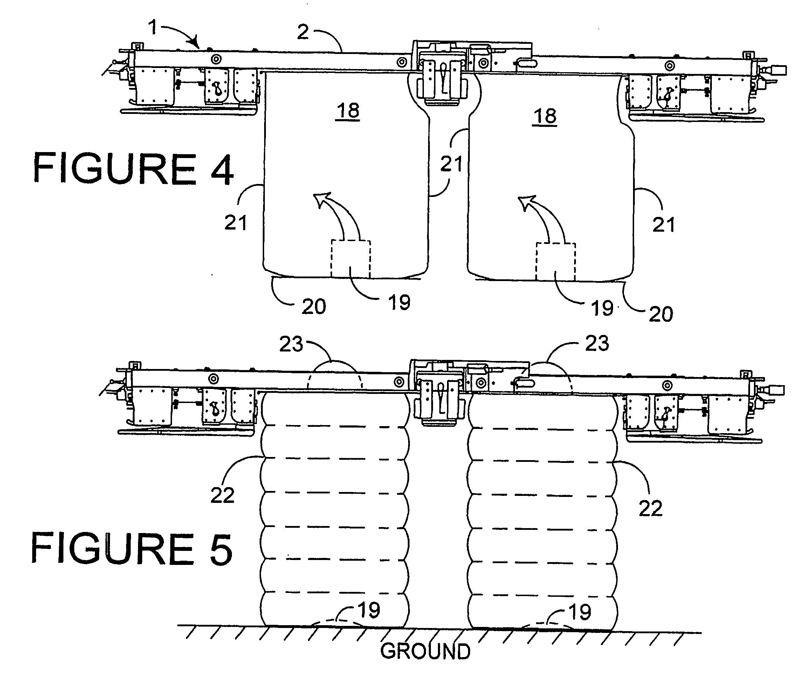

Referring to Figure 3, internal sleeves 19 (integrally formed in each airbag) open and allow air to enter to inflate the airbags. In Figure 4, showing a subsequent stage of descent towards the ground, both airbags 18 fully deploy and achieve slight overpressure as a result of the continuing descent. In this configuration, the sidewalls 21 of both airbags become fully extended as depicted in Figure 4. The airbags 18 have a generally cylindrical form and bear only upon the central part of the underside of the platform 2. Rollover performance is poor and the burst patch system is not adjustable for varying mass. The current design is insufficient for use with current mass.

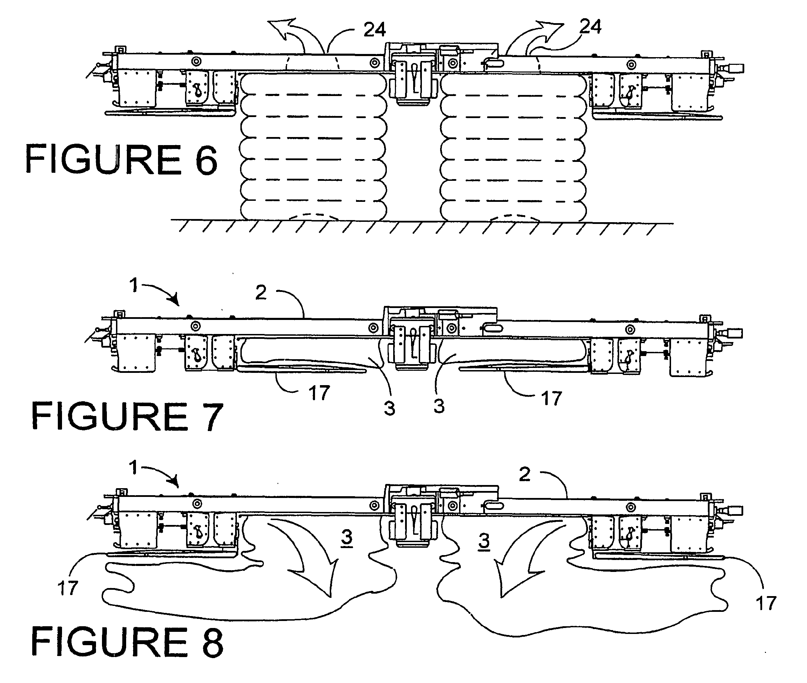

As shown in Figure 5, the platform lands whereby the bottom boards 20 impact upon the ground surface. The internal sleeves 19 seal and collapse, whereupon the airbags begin to pressurise and the latex seals 23 start to stretch. The airbag sidewalls rapidly compress to the form identified at 22. In the final stages of ground impact, the arrangement is as shown in Figure 6. The latex seals 23 have burst to become air exits 24 whereby the pressurised air in each airbag exits the airbag through the burst seals as depicted generally by arrows. Accordingly the air vents but at a controlled rate which leaves high pressure in the bags. The platform decelerates because of this pressure.

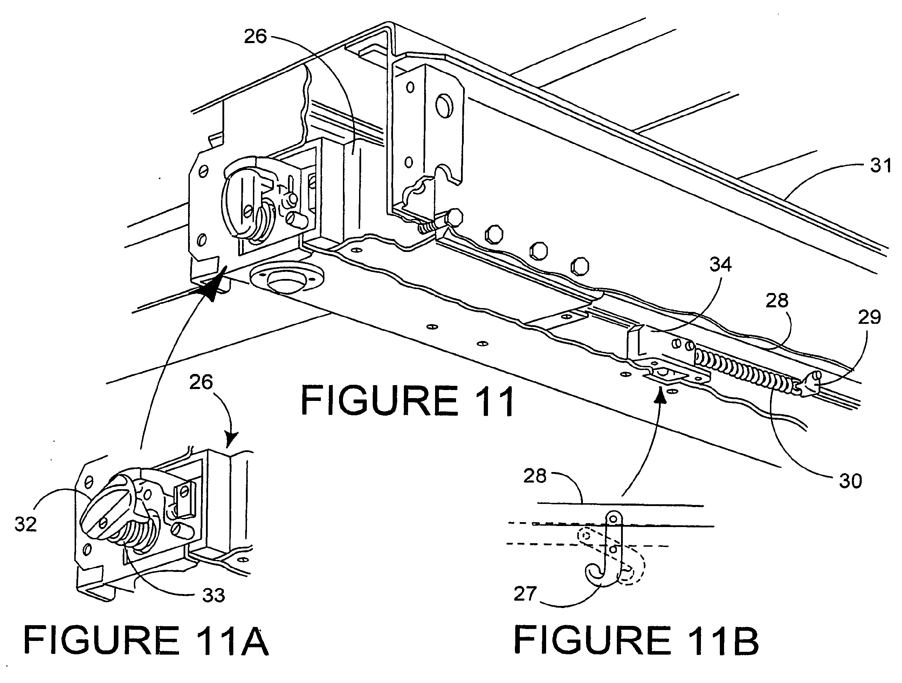

The timer release mechanism of Figure 11 is described subsequently, being essentially of known construction but suitable for use in the context of the present invention.

Referring to the illustrated embodiment of the present invention in Figures 7 to 10 inclusive, the platform in Figure 7 is similar to that shown in Figure 1 to the extent that the platform 1 has a generally flat base 2 consisting of a rectangular framework array, and a skid door 17 is provided to retain the modified airbags 3 in closed position, and for hinging through 180 degrees as in the above described known platform. The modified airbags 3 are suspended from medium stressed platform by top boards which locate in grooves.

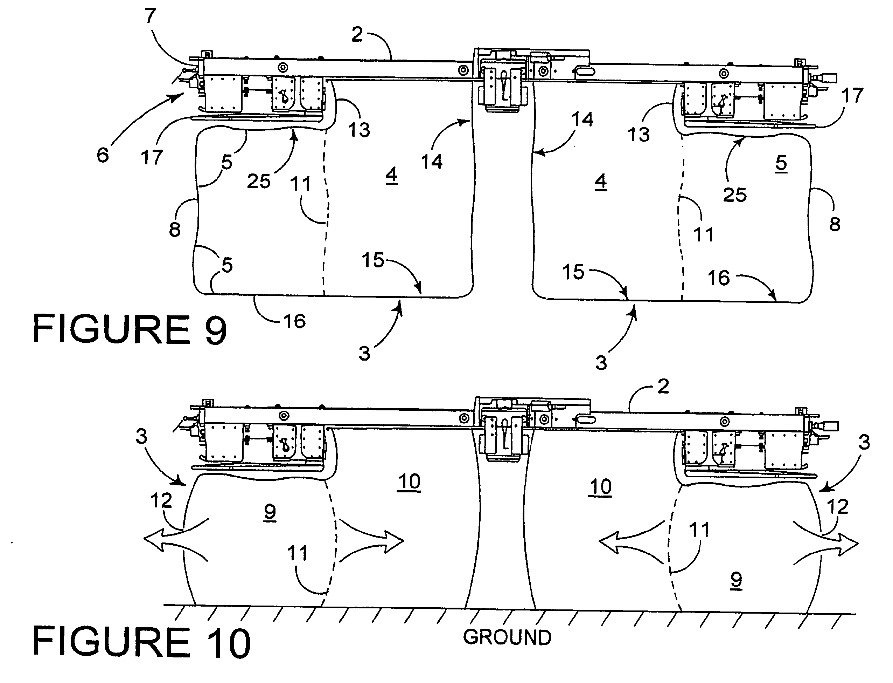

Referring to Figure 8, the skid doors 17 are arranged to open by timer release mechanism, described subsequently with reference to Figure 11 and spring through 180 degrees. The airbags 3 start to deploy through means of a different pressurisation system than the conventional flaps just described. The pressurisation system can be aspirator driven, from a gas generator, by gravity or by some other means, or by a combination of one or more of the aforesaid means. As will be seen from Figure 9, the modified airbags deploy over the full bottom surface of the platform.

Here, the modified airbags 3 fully deploy and achieve optimum overpressure from the pressurisation medium selected. The optimum overpressure is that which allows minimum deceleration over the stroke of the airbag with zero residual velocity. With particular reference to the arrangement in Figure 9, the modified airbag has sidewalls 14 and a base 15 which together with a neck part 13 and a separating wall 11 define a main body part of the modified airbag. The airbags also have an extension part 5, defined by a sidewall 8, the same separating wall 11, a base 16 and an uppermost part 25 such as an upper wall. The base 2 of the delivery platform has an edge 7 at the far side of the rectangular framework array. The sidewall 8 of the extension part 5, in its fully inflated condition extends to the region 6 of the base member edge 7 in the sense that the sidewall edge 8 and the base member edge 7 become generally coplanar with the region 6 of the base member edge. As will be appreciated, this substantially extends the impact area of the airbag base whilst simultaneously providing much greater protection to the platform base and to the payload thereon. In particular, such an arrangement provides enhanced rollover protection, and avoidance of a bursting patch deflation mechanism (the absence of which is preferred), permits a degree of adjustment to deflation characteristics depending upon the mass of the payload.

Referring to Figure 10, the delivery platform impacts upon the ground whereby the base of the modified airbags makes first contact with the ground. The modified airbags are internally zoned or provided with a plurality of chambers to allow differential pressure between the main body part 4 and the extension part 5. By suitable choice of material with appropriate air permeability, for the separating wall 11, the main body part 4 can form an internal low pressure zone (or chamber) 10 whilst the extension part 5 can form an internal high pressure zone (or chamber) 9. High pressure zones at the outermost side walls 8 of the extension part 5 tend to resist rollover when the aerial descent platform lands in prevailing side wind conditions.

Venting of pressurised air from the airbags 3 is directed though a venting control device, preferably maintenance reduced or free for the life of the airbag and flow rate adjustable for payload and/or platform mass variance. As shown, the venting may take place at aperture or region 12 in the sidewall 8 of an extension part 5.

Suitable venting control devices, which can be incorporated into the material of the sidewall 8 of extension parts 5, include for example valves, restrained vents, porous fabric material, other means or a combination of one or more of the aforesaid devices.

It will be appreciated from the Figure 10 arrangement that upon ground impact, the separating wall 11 and the extension part sidewall 8 distend to a greater extent than the sidewall 14 of the main body part. This helps contribute to the extension part forming an internal region 9 at higher compression pressure, than the main body part region 10.

Referring to Figure 11, the known platform release mechanism can be used in the present invention, with little if any modification. With the skid doors in the closed position (not shown) and drop bars (not shown) supporting the doors (not shown), the time delay release mechanism 26 has an arming bolt pushed to the rear and locked in position by rotating the spring biased 33 static line bracket 32. The arming block abuts the channel roller pushing the release "U" channel 28 back against the spring 30 pressure, keeping the hooks 27 pivoted under drop bar rollers. The arming bolt is prevented from moving forward by the time delay release lever. The aerial platform is provided with a centre longitudinal channel 31 and spring attachment bracket 29 from which a spring 30 extends in the region of a release channel 28, to the hook bracket 34.

As the platform starts to move forward, the static line connected between the static line bracket and cargo floor tie down position, becomes taut and rotates the static line brackets to actuate the clockwork timing mechanism. After a seven second delay, the platform is clear of the aircraft and goes into the inversion phase of the extraction. The time delay mechanism 26 trips, the release lever pivots and releases the arming bolt. The arming bolt and release channel 28 move forward under spring 30 pressure and rotate the hooks 27 into the hook bracket 34 away from the drop bars (not shown). The drop bars fall away and skid doors open allowing the airbags to extend.

Embodiments of the present aerial descent platform have or are capable of providing a number of distinct advantages over and above the conventional descent platform described above with reference to Figures 1 to 6 of the accompanying drawings. In particular such embodiments can provide an increased stroke length to absorb more or even all of the descent energy. Embodiments need not incorporate sacrificial components. In such cases, the airbags become immediately re-usable. The exterior of the bag can remain non-porous, but the venting medium could be a sleeve (sealed by elastic band to allow initial pressure build up) or a piece of porous fabric together with the sleeve.

There can be a wide spread of available impact area over most of or the entire damage-vulnerable area of the platform. Internal membranes and vents can be provided in a manner which so distributes the released air on a sideways landing that a restoring moment is created to right the platform. It is possible to use inflation methods other than the conventional ram air effect, to improve upon ram air inflation. For instance, aspirators an used on aircraft escape slides or cold gas systems as used in motor vehicle airbags could be deployed for positive airbag inflation after the skid doors have swung open.

## Claims

1. An aerial delivery platform (1) comprising a base (2) for supporting a payload, one or more inflatable airbag(s) (18) mounted underneath the base (2) and capable of inflation during aerial descent, the airbag(s) having a main body part (4) extending downwardly of the base, and an extension part (5) adjacent the main body part extending outwardly thereof and having a sidewall (8) which, upon airbag inflation, extends to the region (6) of at least one base member edge (7), the extension part (5) also forming an extension to the base (15) of the main body part, **characterised in that** the or each airbag incorporates sidewalls, a base, a neck part and an internally located separating wall (11) spacing the extension part from the main body part.

2. A platform as claimed in claim 1, wherein the main body part (4) is formed integrally with the extension part (5).

3. A platform as claimed in claim 1 or 2, wherein, upon inflation of the airbags, the underside of the extension part and the underside of the main body part become generally coplanar.

4. A platform as claimed in any preceding claim, wherein the underside of the main body part and the underside of the extension part provide protective coverage to the underneath surface and edges of the platform base (2) upon impact with the ground.

5. A platform as claimed in any preceding claim, wherein the interior of the main body part (4) constitutes a primary internal chamber whilst the interior of the extension part (5) comprises a secondary internal chamber.

6. A platform as claimed in claim 5 wherein the primary and secondary chambers are separated by a membrane located internally of the airbags.

7. A platform as claimed in any preceding claim, which comprises a generally flat base consisting of a rectangular framework array.

8. A platform as claimed in any preceding claim, wherein a pressurisation means for the airbags is provided and which operates by use of an aspirator, a gas generator, by gravity or by a combination of more than one of the aforesaid means.

9. A platform as claimed in any preceding claim, wherein, in the fully inflated condition, the sidewalls of the extension parts extend to the region of the base member edge whereby the extension parts sidewall edges become generally coplanar with the region of the base member edge.

10. A platform as claimed in any preceding claim wherein a burst patch deflation mechanism is absent.

11. A platform as claimed in any preceding claim, wherein the internal chamber of the main body part is adapted and arranged to operate at a pressure differential with respect to the internal chamber of the extension part.

12. A platform as claimed in claim 11, wherein the internal chamber of the extension part is adapted to inflate at a higher internal pressure than the internal chamber of the main body part.

13. A platform as claimed in any preceding claim, wherein a venting control device is incorporated into each airbag, which is flow-rate adjustable.

14. A platform as claimed in claim 13, wherein the venting control device is incorporated into the material of the sidewall of the extension parts.

15. A platform as claimed in claim 13 or 14, wherein the venting device comprises a valve, a restrained vent, a sealed sleeve, porous fabric material or a combination of more than one of the aforesaid means.

## Patentansprüche

1. Luftabwurfplattform (1) mit einer Grundplatte (2) zum Tragen einer Nutzlast; einem oder mehreren aufblasbaren Airbags (18), die unterhalb der Grundplatte (2) angebracht sind und während des Abwurfs aus der Luft aufgeblasen werden können, wobei der (die) Airbags einen Hauptkörperteil (4), der sich von der Grundplatte nach unten erstreckt und ein an das Hauptkörperteil angrenzendes Verlängerungsteil (5), das sich von diesem nach außen erstreckt sowie eine Seitenwand (8) aufweisen, die sich beim Aufblasen des Airbags zu dem Bereich (6) von zumindest einer Kante (7) des Grundplattenelements erstreckt, das Verlängerungsteil (5) außerdem eine Verlängerung zu dem Unterteil (15) des Hauptkörperteils bildet,
**dadurch gekennzeichnet, dass** der oder jeder Airbag Seitenwände, eine Grundplatte, einen Halsteil und eine im Inneren angebrachte Trennwand (11) einschließt, womit das Verlängerungsteil im Abstand von dem Hauptkörperteil angeordnet wird.

2. Plattform nach Anspruch 1, bei der der Hauptkörperteil (4) mit dem Verlängerungsteil (5) in einem Stück ausgebildet ist.

3. Plattform nach Anspruch 1 oder 2, bei dem die Unterseite des Verlängerungsteils und die Unterseite des Hauptkörperteils beim Aufblasen der Airbags im Allgemeinen koplanar werden.

4. Plattform nach einem vorhergehenden Anspruch, bei der die Unterseite des Hauptkörperteils und die Unterseite des Verlängerungsteils eine schützende Abdeckung für die untere Fläche und die Kanten der Plattform-Grundplatte (2) beim Aufprall auf dem Boden bewirken.

5. Plattform nach einem vorhergehenden Anspruch, bei der das Innere des Hauptkörperteils (4) eine primäre innere Kammer bildet, während das Innere des Verlängerungsteils (5) eine sekundäre innere Kammer bildet.

6. Plattform nach Anspruch 5, bei der die primäre Kammer und die sekundäre Kammer durch eine im Inneren der Airbags angeordnete Membran getrennt sind.

7. Plattform nach einem vorhergehenden Anspruch, die eine im Allgemeinen flache Grundplatte umfasst, die aus einer rechteckigen Gestellanordnung besteht.

8. Plattform nach einem vorhergehenden Anspruch, bei der für die Airbags eine Einrichtung zur Beaufschlagung mit Druck vorgesehen ist, die durch Verwendung eines Ansauggerätes, eines Gasgenerators, durch Schwerkraft oder durch eine Kombination von mehr als einer dieser oben erwähnten Einrichtungen funktioniert.

9. Plattform nach einem vorhergehenden Anspruch, bei dem sich im völlig aufgeblasenen Zustand die Seitenwände der Verlängerungsteile zu dem Bereich der Kante des Grundplattenelements erstrecken, wodurch die seitlichen Wandkanten der Verlängerungsteile im Allgemeinen mit dem Bereich der Kante des Grundplattenelements koplanar werden.

10. Plattform nach einem vorhergehenden Anspruch, bei der ein Aufsprengflicken-Luftablassmechanismus fehlt.

11. Plattform nach einem vorhergehenden Anspruch, bei der die innere Kammer des Hauptkörperteils so ausgeführt und angeordnet ist, dass sie bei einer Druckdifferenz in Bezug auf die innere Kammer des Verlängerungsteils arbeitet.

12. Plattform nach Anspruch 11, bei der die innere Kammer des Verlängerungsteils mit einem höheren Innendruck als die innere Kammer des Hauptkörperteils aufgeblasen werden soll.

13. Plattform nach einem vorhergehenden Anspruch, bei der eine Druckausgleichregelvorrichtung in jedem Airbag eingebaut ist, mit der der Volumenstrom eingestellt werden kann.

14. Plattform nach Anspruch 13, bei der die Druckausgleichregelvorrichtung in das Material der Seitenwand der Verlängerungsteile eingebaut ist.

15. Plattform nach Anspruch 13 oder 14, bei der die Entlüftungsvorrichtung ein Ventil, eine beschränkte Lüftungsöffnung, eine abgedichtete Muffe, poröses Gewebematerial oder eine Kombination von mehr als einer dieser oben erwähnten Einrichtungen umfasst.

## Revendications

1. Plate-forme de distribution aérienne (1) comportant une base (2) destinée à supporter une charge, un ou plusieurs coussins gonflables (18) montés sous la base (2) et capables de se gonfler pendant la descente aérienne, le ou les coussins gonflables ayant une partie de corps principal (4) s'étendant vers le bas de la base, et une partie d'extension (5) adjacente à la partie de corps principal s'étendant vers l'extérieur et ayant une paroi latérale (8) qui, lors du gonflage du coussin gonflable, s'étend jusqu'à une zone (6) d'au moins un bord d'élément de base (7), la partie d'extension (5) formant également une extension pour la base (15) de la partie de corps principal, **caractérisée en ce que** le ou chaque coussin gonflable incorpore des parois latérales, une base, une partie de col et une paroi de séparation disposée intérieurement (11) espaçant la partie d'extension de la partie de corps principal.

2. Plate-forme selon la revendication 1, dans laquelle la partie de corps principal (4) est formée intégralement avec la partie d'extension (5).

3. Plate-forme selon la revendication 1 ou 2, dans laquelle, lors du gonflage des coussins gonflable, le côté inférieur de la partie d'extension et le côté inférieur de la partie de corps principal deviennent globalement coplanaires.

4. Plate-forme selon l'une quelconque des revendications précédentes, dans laquelle le côté inférieur de la partie de corps principal et le côté inférieur de la partie d'extension procure une couverture de protection pour la surface inférieure et les bords de la base de plateforme (2) lors de l'impact avec le sol.

5. Plate-forme selon l'une quelconque des revendications précédentes, dans laquelle l'intérieur de la partie de corps principal (4) constitue une chambre interne principale alors que l'intérieur de la partie d'extension (5) constitue une chambre interne secondaire.

6. Plate-forme selon la revendication 5, dans laquelle les chambres principale et secondaire sont séparées par une membrane disposée à l'intérieur des coussins gonflables.

7. Plate-forme selon l'une quelconque des revendications précédentes, qui comprend une base globalement plate consistant en une ossature rectangulaire.

8. Plate-forme selon l'une quelconque des revendications précédentes, dans laquelle des moyens de pressurisation pour les coussins gonflables sont prévus et fonctionnent grâce à l'utilisation d'un aspirateur, d'un générateur de gaz, par gravité ou par une combinaison de plus d'un des moyens mentionnés ci-dessus.

9. Plate-forme selon l'une quelconque des revendications précédentes, dans laquelle, dans la condition totalement gonflée, les parois latérales des parties d'extension s'étendent jusqu'à la zone du bord d'élément de base de sorte que les bords de paroi latérale de partie d'extension deviennent globalement coplanaires avec la zone du bord d'élément de base.

10. Plate-forme selon l'une quelconque des revendications précédentes, dans laquelle un mécanisme de dégonflage par pièce d'éclatement est absent.

11. Plate-forme selon l'une quelconque des revendications précédentes, dans laquelle la chambre interne de la partie de corps principal est prévue et agencée afin de fonctionner à une différence de pression par rapport à la chambre interne de la partie d'expansion.

12. Plate-forme selon la revendication 11, dans laquelle la chambre interne de la partie d'extension est prévue pour se gonfler à une pression interne plus élevée que la chambre interne de la partie de corps principal.

13. Plate-forme selon l'une quelconque des revendications précédentes, dans laquelle un dispositif de commande de mise à l'air libre est incorporé dans chaque coussin gonflable, qui est réglable en débit.

14. Plate-forme selon la revendication 13, dans laquelle le dispositif de commande de mise à l'air libre est incorporé dans la matière de la paroi latérale des parties d'extension.

15. Plate-forme selon la revendication 13 ou 14, dans lequel le dispositif de mise à l'air libre comporte une soupape, une mise à l'air libre retenue, un manchon scellé, une matière en toile poreuse ou une combinaison de plus d'un des moyens mentionnés ci-dessus.
